# EUROPEAN PATENT SPECIFICATION

(11) **EP 2 525 599 B1**
(45) Date of publication and mention of the grant of the patent: **08.10.2014**
(21) Application number: 11741856.6
(22) Date of filing: 25.01.2011
(51) Int. Cl.: H04W 48/08

(54) **METHOD AND DEVICE FOR OBTAINING SYSTEM INFORMATION OF CELL**
VERFAHREN UND VORRICHTUNG ZUR GEWINNUNG VON SYSTEMINFORMATIONEN ÜBER MOBILGERÄTE
PROCÉDÉ ET DISPOSITIF POUR OBTENIR DES INFORMATIONS SYSTÈME DE CELLULE

(30) Priority: 11.02.2010 CN 201010109276
(43) Date of publication of application: 21.11.2012
(73) Proprietor: Huawei Technologies Co., Ltd., Shenzhen, Guangdong 518129 (CN)
(72) Inventor: XU, Bin, Shenzhen Guangdong 518129 (CN)
(74) Representative: Schmitz, Alexander
(86) International application number: PCT/CN2011/070567
(87) International publication number: WO 2011/097985

(56) References cited:
- WO-A1-2009/022971
- WO-A2-2009/043002
- CN-A- 101 568 196
- CN-A- 101 616 434
- CN-A- 101 646 225
- US-A1- 2007 291 730

## Description

### FIELD OF THE INVENTION

The present invention relates to the field of communications, and in particular, to a method and device for obtaining system information of a cell.

### BACKGROUND OF THE INVENTION

In a process of handing over a user equipment (User Equipment, UE) to a closed subscriber group (Closed Subscriber Group, CSG) cell in a private network, the UE needs to obtain system information of the CSG cell to be accessed.

A method provided by the prior art for a UE to obtain system information of a CSG cell may include:

The UE obtains a primary synchronization code (Primary Synchronization Code, PSC) or physical cell identity (Physical Cell Identity, PCI) of a target CSG cell after the UE detects the CSG cell according to fingerprint information or a network configuration and determines the target CSG cell to be accessed; the UE compares the PSC or PCI of the CSG cell with a PSC or PCI of a CSG cell stored in the fingerprint information to judge whether the CSG cell is the CSG cell stored in the fingerprint information, that is, judge whether the CSG cell is a member CSG cell to which the UE subscribes; the UE sends a measurement report to a network side, where the measurement report includes the PSC or PCI of the CSG cell and an indication identifier indicating whether the CSG cell is a member CSG cell; the network side sends measurement control information to the UE according to the indication identifier indicating whether the CSG cell is a member CSG cell, where the measurement control information includes information indicating whether the UE obtains the system information of the CSG cell; if the information indicating whether the UE obtains the system information of the CSG cell is to obtain the system information of the CSG cell, the UE obtains the system information of the CSG cell, and otherwise, the UE does not obtain the system information of the CSG cell.

WO2009022971 relates to radio communications that involve neighbor cell relations. Neighbor cell relation lists are initialized and managed in various ways that are especially beneficial to closed subscriber group (CSG) cell served by CSG base stations. Typically, only a radio terminal belonging to the CSG is permitted to access and receive service from the CSG cell. As a result, information is provided to radio terminals in the cells neighboring the CSG cell that generally indicates that radio terminals are not to be reported to a respective serving base station signal quality measurement of a signal received from the CSG base station unless the radio terminal is a member of the closed subscriber group for the CSG cell. When a CSG cell is powered-up, it is determined whether the CSG cell has previously been powered-up in the same environment. If so, the neighbor cell relation information for the CSG cell is updated with other network node(s). If not, neighbor cell relations of the CSG cell are initialized. In one example, when a new neighbor cell relation has been added to its neighbor cell relations list, the CSG base station inherits neighbor cell relation list entries from the newly-added neighbor cell.

WO2009/043002A2 discloses a method and apparatus for supporting home Node B (HNB) services. A wireless transmit/receive unit (WTRU) receives HNB access restriction information from an HNB and accesses the HNB if an access to the HNB is allowed based on the HNB access restriction information. The HNB access restriction information may be a closed subscriber group identity (CSG ID), a status bit indicating whether an HNB cell is available or not, an identity of WTRUs that are allowed to access the HNB, information indicating whether an access to a cell is barred or not. The WTRU may trigger measurement for cell reselection even though signal strength on a currently connected cell is above a threshold. The measurement may be triggered manually, periodically, under the instruction from the network, or based on a neighbor cell list including information about HNB cells located nearby.

The PSC or PCI of the CSG cell is configured by the network side and may change. For example, when a home base station (Home NodeB, HNB) to which the CSG cell homes starts up or shuts down, it is caused that the PSC or PCI of the CSG cell changes. When the PSC or PCI of the CSG cell changes, the system information of the member CSG cell cannot be normally obtained by using the method provided by the prior art, which causes problems that the UE cannot access the member CSG cell and CSG cell handover of the UE fails, and so on.

### SUMMARY OF THE INVENTION

Embodiments of the present invention provide a method and device for obtaining system information of a cell, so that system information of a member closed cell can still be normally obtained by a user equipment after a primary synchronization code or physical cell identity of the member closed cell changes.

In order to solve the above technical problem, technical solutions provided in the embodiments of the present invention include:

A method for obtaining system information of a cell by a user equipment includes: determining a target closed cell; obtaining a primary synchronization code or physical cell identity of the target closed cell; if the primary synchronization code or physical cell identity of the target closed cell is different from a stored primary synchronization code or physical cell identity, starting a timer, where the stored primary synchronization code or the stored physical cell identity of the closed cell is stored in fingerprint information, where the fingerprint information includes related information that is recorded by a user equipment for the closed cell that UE has accessed, and the related information of each closed cell is recorded in the fingerprint information, and if the target closed cell is still detected after the timer times out, sending a first measurement report to a network side, where the first measurement report includes the primary synchronization code or physical cell identity of the target closed cell; receiving measurement control information sent by the network side, where the measurement control information indicates that system information of the target closed cell should be obtained; and obtaining the system information of the target closed cell according to the measurement control information.

A method for obtaining system information of a cell on a network side includes: receiving a first measurement report sent by a user equipment, where the first measurement report includes a primary synchronization code or physical cell identity of a target closed cell that is determined by the user equipment, and a subscription indication identifier, where the subscription indication identifier is used to indicate whether the target closed cell is a member closed cell to which the user equipment subscribes; if the subscription indication identifier indicates that the target closed cell is not the member closed cell to which the user equipment subscribes, starting a timer; and if a second measurement report sent by the user equipment for the target cell is received after the timer times out, sending measurement control information to the user equipment, where the measurement control information indicates that system information of the target closed cell should be obtained.

A user equipment includes:
a determining module, configured to determine a target closed cell; a first obtaining module, configured to obtain a primary synchronization code or physical cell identity of the target closed cell that is determined by the determining module; a first timing module, configured to start a timer if the primary synchronization code or physical cell identity of the target closed cell, where the primary synchronization code or physical cell identity of the target closed cell is obtained by the first obtaining module, is different from a stored primary synchronization code or physical cell identity, where the stored primary synchronization code or the stored physical cell identity of the closed cell is stored in fingerprint information, where the fingerprint information includes related information that is recorded by a user equipment for the closed cell that UE has accessed, and the related information of each closed cell is recorded in the fingerprint information; a first sending module, configured to send a first measurement report to a network side if the target closed cell is still detected after the timer started by the first timing module times out, where the first measurement report includes the primary synchronization code or physical cell identity of the target closed cell; a receiving module, configured to receive measurement control information sent by the network side based on the first measurement report, where the measurement control information indicates that system information of the target closed cell should be obtained; and a second obtaining module, configured to obtain the system information of the target closed cell according to the measurement control information received by the receiving module.

A radio network controller includes:
a receiving module, configured to receive a first measurement report sent by a user equipment, where the first measurement report includes a primary synchronization code or physical cell identity of a target closed cell that is determined by the user equipment, and a subscription indication identifier, where the subscription indication identifier is used to indicate whether the target closed cell is a member closed cell to which the user equipment subscribes; a timing module, configured to start a timer if the subscription indication identifier received by the receiving module indicates that the target closed cell is not the member closed cell to which the user equipment subscribes; and a sending module, configured to send measurement control information to the user equipment if a second measurement report sent by the user equipment for the target cell is received after the timer of the timing module times out, where the measurement control information indicates that system information of the target closed cell should be obtained.

By using the method and device for obtaining system information of a cell according to the embodiments of the present invention, when it is judged that the primary synchronization code or physical cell identity of the target closed cell is different from the stored primary synchronization code or physical cell identity, a timer is started, and if the target closed cell is still detected after the timer times out, the system information of the target cell is obtained. Therefore, with the technical solutions provided in the embodiments of the present invention, the user equipment can still normally obtain the system information of the member closed cell after the primary synchronization code or physical cell identity of the member closed cell changes, and the problem in the prior art that the system information of the member closed cell cannot be normally obtained after the primary synchronization code or physical cell identity of the closed cell changes is solved. In the technical solutions provided in the embodiments of the present invention, because the user equipment can normally obtain the system information of the member closed cell, it is ensured that the user equipment can be normally handed over to the closed cell.

### BRIEF DESCRIPTION OF THE DRAWINGS

To illustrate the technical solutions in the embodiments of the present invention or the prior art more clearly, the accompanying drawings needed in the description of the embodiments or the prior art are briefly introduced in the following. Evidently, the accompanying drawings in the following description are only a plurality of embodiments of the present invention, and those of ordinary skill in the art may obtain other accompanying drawings according to these accompanying drawings without creative efforts.
FIG. 1 is a flowchart of a method for obtaining system information of a cell according to an embodiment of the present invention;
FIG. 2 is a flowchart of a method for obtaining system information of a cell according to another embodiment of the invention;
FIG. 3 is a sequence chart of a method for obtaining system information of a cell according to yet another embodiment of the invention;
FIG. 4 is a sequence chart of a method for obtaining system information of a cell according to still another embodiment of the invention;
FIG. 5 is a first schematic structural diagram of a user equipment according to an embodiment of the present invention;
FIG. 6 is a second schematic structural diagram of a user equipment according to an embodiment of the present invention; and
FIG. 7 is a schematic structural diagram of a radio network controller according to an embodiment of the present invention.

### DETAILED DESCRIPTION OF THE EMBODIMENTS

The technical solutions in the embodiments of the present invention are described clearly and completely below with reference to the accompanying drawings in the embodiments of the present invention. Evidently, the described embodiments are only part rather than all of the embodiments of the present invention. Other embodiments obtained by those of ordinary skill in the art based on the embodiments of the present invention without creative efforts are all within the protection scope of the present invention.

To solve the problem in the prior art that system information of a member closed cell cannot be normally obtained after a primary synchronization code or physical cell identity of the closed cell changes, the embodiments of the present invention provide a method, device, and system for obtaining system information of a cell.

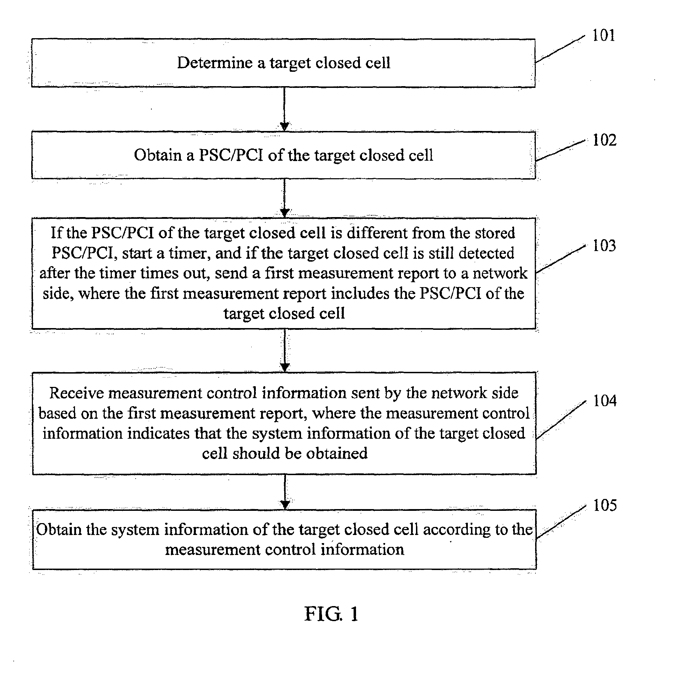

As shown in FIG. 1, a method for obtaining system information of a cell provided by an embodiment of the present invention may include:
Step 101: Determine a target closed cell.
Step 102: Obtain a PSC or PCI of the target closed cell.

In this embodiment and the following embodiments, the closed cell is a private cell that employs a closed access mode and only permits access of a subscription user, or a private cell that employs a hybrid access mode and permits not only access of a subscription user but also access of a non-subscription user and in which quality of service for the subscription user is better than quality of service for the non-subscription user. For example, the closed cell may be a CSG cell.

If a radio access technology (RAT) used in the target closed cell is a universal mobile telecommunication system (Universal Mobile Telecommunication System, UMTS), the PSC of the target cell is obtained in step 102; and if the RAT used in the target closed cell is LTE, the PCI of the target cell is obtained in step 102.

Step 103: If the PSC or PCI of the target closed cell is different from the stored PSC or PCI of the closed cell, start a timer, and if the target closed cell is still detected after the timer times out, send a first measurement report to a network side, where the first measurement report includes the PSC or PCI of the target closed cell.

In this embodiment, the PSC or PCI of the closed cell is stored in fingerprint information, where the fingerprint information includes related information that is recorded by a UE for the closed cell that UE has accessed. The related information of each closed cell is recorded in the fingerprint information and may include any one or any combination of the following: an absolute physical location of the closed cell (for example, a physical location obtained through a GPS positioning method), a wireless environment where the closed cell is located (for example, a macro cell neighboring to the closed cell), the PSC or PCI of the closed cell, or frequency of the closed cell, and so on.

In this embodiment, the target closed cell whose PSC or PCI is different from the stored PSC or PCI of the closed cell may be detected periodically within the timing time of the timer in step 103. If the target closed cell can still be detected after the timer times out, the first measurement report is sent to the network side; if the target closed cell cannot be detected within the timing time of the timer, the subsequent process is stopped.

In this embodiment, the timing time of the timer may be set by the network side, and especially, by a serving radio network controller (Serving Radio Network Controller, SRNC) of the network side, through a measurement control message or system information broadcast; it may also be a preset default value, for example, the timing time of the timer may be preset to 6 minutes. Definitely, in practical applications, the timing time of the timer may also be set in other ways, which are not described herein.

Step 104: Receive the measurement control information sent by the network side based on the first measurement report, where the measurement control information indicates that the system information of the target closed cell should be obtained.

Step 105: Obtain the system information of the target closed cell according to the measurement control information received in step 104.

In this embodiment, if the PSC or PCI of the target closed cell is the same as or different from the stored PSC or PCI of the closed cell, but the target closed cell can still be detected after the timer times out, it may be further determined that the target closed cell is member closed cell to which the UE subscribes; and otherwise, the target closed cell is not the member closed cell to which the UE subscribes.

Optionally, when the target closed cell is not the member closed cell to which the UE subscribes, the method may further include a step of sending a second measurement report to the network side, where the second measurement report includes the PSC or PCI of the target closed cell, and a subscription indication identifier, where the subscription indication identifier indicates that the target closed cell is not the member closed cell to which the UE subscribes. By sending the second measurement report to the network side, the network side is enabled to judge that the target closed cell may be the member closed cell to which the UE subscribes when receiving the first measurement report sent in step 103, so that the network side can indicate that the UE should obtain the system information of the target closed cell, thereby avoiding the problem that the UE cannot access the member closed cell because the PSC or PCI changes.

In this embodiment, when it is judged that the target closed cell is the member closed cell to which the UE subscribes, the UE may directly send the measurement report that includes the PSC or PCI of the target closed cell to the network side, and obtain the system information of the target cell according to the measurement control information sent by the network side; optionally, the measurement report that is directly sent by the UE to the network side and includes the PSC or PCI of the target closed cell may also include the identifier indicating the target closed cell is the member closed cell to which the UE subscribes.

In this embodiment, if the target cell cannot be detected after the timer times out, the subsequent process is stopped.

By using the method for obtaining system information of a cell according to the embodiment of the present invention, when it is judged that the PSC or PCI of the target closed cell is different from the stored PSC or PCI, a timer is started, and if the target closed cell is still detected after the timer times out, the system information of the target cell is obtained. Therefore, with the technical solution provided in the embodiment of the present invention, the UE can still normally obtain the system information of the member closed cell after the PSC or PCI of the member closed cell changes. In the technical solution of the embodiment of the present invention, because the UE can normally obtain the system information of the member closed cell, it is ensured that the UE can be normally handed over to the closed cell. In the technical solution provided in the embodiment of the present invention, the system information of the target closed cell can be obtained selectively, thereby saving the network resource occupied by obtaining the system information of the target closed cell, reducing the probability of signaling and data loss in the process of obtaining the system information of the target cell, and effectively reducing the power consumption of the equipment.

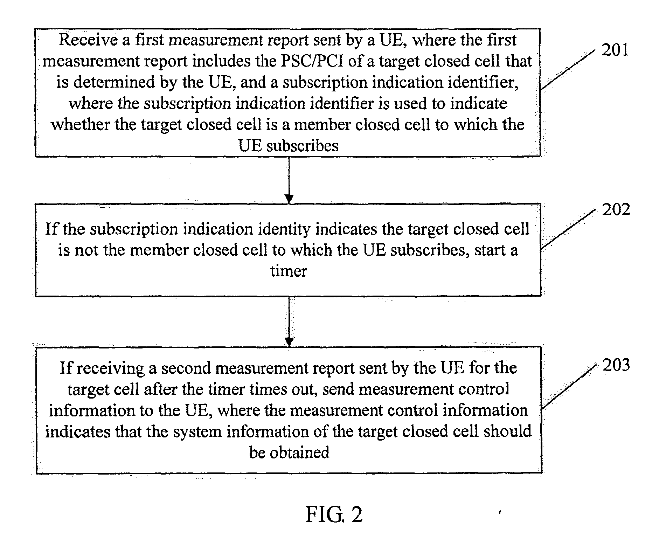

As shown in FIG. 2, another embodiment of the present invention further provides a method for obtaining system information, including:

Step 201: Receive a first measurement report sent by a UE, where the first measurement report includes the PSC or PCI of a target closed cell of the UE, and a subscription indication identifier, where the subscription indication identifier is used to indicate whether the target closed cell is a member closed cell to which the UE subscribes.

In this embodiment, if the target closed cell is the member closed cell to which the UE subscribes, the identifier that indicates whether the target closed cell is the member closed cell to which the UE subscribes is "likely"; and if the target closed cell is not the member closed cell to which the UE subscribes, the identifier that indicates whether the target closed cell is the member closed cell to which the UE subscribes is "unlikely".

A specific form of the identifier that indicates whether the target closed cell is the member closed cell to which the UE subscribes is not limited in the embodiment of the present invention. In practical applications, the identifier may also be other identifiers, which are not described herein.

Step 202: If the subscription indication identifier obtained in step 201 indicates that the target closed cell is not the member closed cell to which the UE subscribes (for example, the unlikely identifier described in step 201), start a timer.

Step 203: If a second measurement report sent by the UE for the target cell is received after the timer times out, send measurement control information to the UE, where the measurement control information indicates that the system information of the target closed cell should be obtained.

Optionally, the second measurement report may further carry the identifier that indicates whether the target closed cell is the member closed cell to which the UE subscribes ("likely" or "unlikely").

According to the method for obtaining system information of a cell provided in the embodiment of the present invention, a timer is started when it is judged that the target cell is not the member cell to which the UE subscribes according to the identifier included in the first measurement report sent by the UE, where the identifier indicates whether the target closed cell is the member closed cell to which the UE subscribes, and if a second measurement report sent by the UE for the target cell is received after the timer times out, measurement control information is sent to the UE, where the measurement control information indicates that the UE should obtain the system information of the target cell. Therefore, with the technical solution provided in the embodiment of the present invention, the UE can still normally obtain the system information of the member closed cell after the PSC or PCI of the member closed cell changes, and the problem in the prior art that the system information of the member closed cell cannot be normally obtained after the PSC or PCI of the closed cell changes is solved. In the technical solution provided in the embodiment of the present invention, because the UE can normally obtain the system information of the member closed cell, it is ensured that the UE can be normally handed over to the closed cell. In the technical solution provided in the embodiment of the present invention, the system information of the target closed cell can be obtained selectively, thereby saving the network resource occupied by obtaining the system information of the target closed cell, reducing the probability of signaling and data loss in the process of obtaining the system information of the target cell, and effectively reducing the power consumption of the equipment.

To make those skilled in the art better understand the technical solution provided in the embodiment of the present invention, a solution applied in the UMTS radio access technology is taken as an example in the embodiment of the present invention to illustrate the method for obtaining system information of a cell according to the embodiment of the present invention in detail.

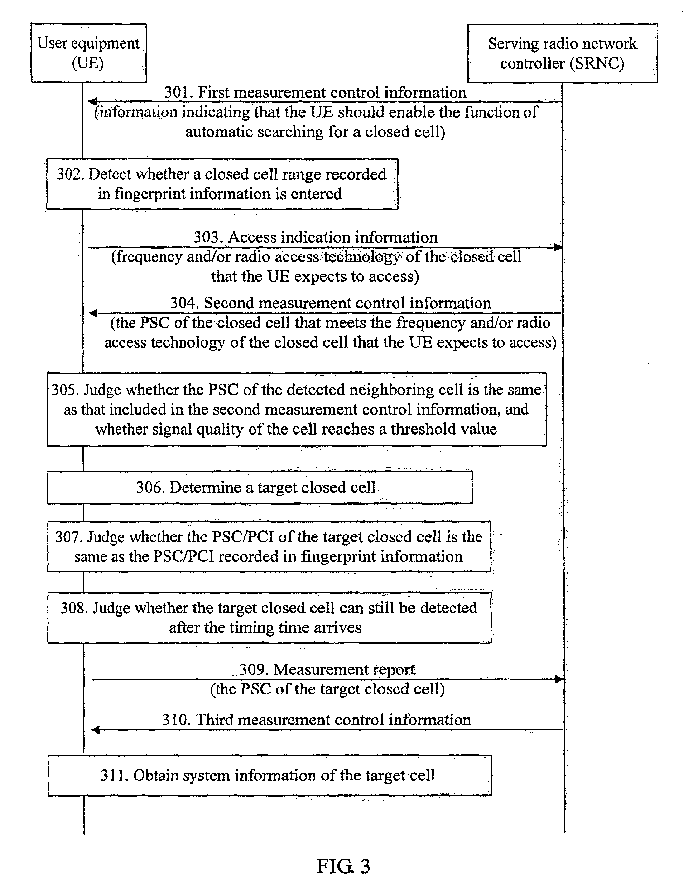

As shown in FIG. 3, a method for obtaining system information of a cell according to yet another embodiment of the present invention may include:

Step 301: An SRNC sends first measurement control information to a UE, where the first measurement control information includes information that indicates that the UE should enable the function of automatic searching for a closed cell.

Step 302: According to the indication which is of enabling the function of automatic searching for the closed cell and included in the first measurement control information, the UE enables the function of automatic searching for the closed cell, and detects whether a closed cell range recorded in prestored fingerprint information is entered.

In this embodiment, the fingerprint information records related information of the closed cell that the UE has accessed. The related information of each closed cell is recorded in the fingerprint information and may include: an absolute physical location of the closed cell (for example, a physical location obtained through a GPS positioning method), a wireless environment where the closed cell is located (for example, a macro cell to which the closed cell homes), the PSC or PCI of the closed cell, or frequency of the closed cell, and so on.

In this embodiment, the UE may obtain current physical location information through a GPS positioning method, compare the current physical location information with the absolute physical location of the closed cell, where the absolute physical location is recorded in the fingerprint information, and detect, according to a comparison result, whether the closed cell range recorded in the prestored fingerprint information is entered.

Definitely, in practical applications, the UE may also detect whether the closed cell range recorded in the prestored fingerprint information is entered in other ways, for example, the UE may detect whether the closed cell range recorded in the prestored fingerprint information is entered by detecting the wireless environment nearby. Such other ways are not described herein.

Step 303: When entering the closed cell range recorded in the fingerprint information, the UE sends access indication information to the SRNC, where the access indication information includes frequency and/or radio access technology of the closed cell that the UE expects to access.

In this embodiment, the radio access technology of the closed cell that the UE expects to access is a UMTS.

Step 304: The SRNC obtains the PSC of the closed cell that meets the frequency and/or radio access technology of the closed cell that the UE expects to access, and sends second measurement control information to the UE, where the second measurement control information includes the PSC of the closed cell that meets the frequency and/or radio access technology of the closed cell that the UE expects to access.

Step 305: The UE detects the neighboring closed cell, obtains the PSC of the detected neighboring closed cell, judges whether the PSC is the same as the PSC of the closed cell that is included in the second measurement control information and meets the frequency and/or radio access technology of the closed cell that the UE expects to access, and judges whether the signal quality of the neighboring closed cell reaches a preset threshold value.

In this embodiment, the preset threshold value may be a threshold value delivered by the SRNC through the first measurement control information, and the threshold value is used to filter closed cells with poor signal quality among the neighboring closed cells that are detected by the UE.

Step 306: The UE determines that the neighboring closed cell whose PSC is the same as the PSC of the closed cell that is included in the second measurement control information and meets the frequency and/or radio access technology of the closed cell that the UE expects to access and whose signal quality reaches the preset threshold value is a target closed cell.

Step 307: The UE compares the PSC of the target closed cell with the PSC which is of the closed cell and recorded in the fingerprint information. If the PSC of the target closed cell is the same as the PSC which is of the closed cell and recorded in the fingerprint information, step 309 is performed; and otherwise, step 308 is performed.

Step 308: The UE starts a timer, and judges whether the target closed cell can still be detected after the timer times out. If the target closed cell can be detected, step 309 is performed; and otherwise, the process ends.

In this embodiment, the timing time of the timer may be set by the SRNC through a measurement control message or system information broadcast; it may also be a preset default value, for example, the timing time of the timer may be preset to 6 minutes. If the timing time of the timer is set by the SRNC through the measurement control message, the timing time of the timer may be set to T1; and otherwise, the timing time of the timer may be set to T2. Definitely, in practical applications, the timing time of the timer may also be set in other ways, which are not described herein.

In step 308, that the UE can detect the target closed cell refers to that the UE can detect the signal of the target closed cell, and the signal quality of the target closed cell reaches the threshold value described in step 305.

Step 309: The UE sends a measurement report to the SRNC, where the measurement report includes the PSC of the target closed cell.

Step 310: The SRNC sends third measurement control information to the UE, where the third measurement control information indicates that the UE should obtain the system information of the target closed cell.

Step 311: The UE obtains the system information of the target closed cell according to the third measurement control information.

According to the method for obtaining system information of a cell provided in the embodiment of the present invention, when the UE judges that the PSC or PCI of the target closed cell is different from the PSC or PCI recorded in the fingerprint information, a timer is started, and if the target closed cell is still detected after the timer times out, the system information of the target cell is obtained. Therefore, with the technical solution provided in the embodiment of the present invention, the UE can still normally obtain the system information of the member closed cell after the PSC or PCI of the member closed cell changes. In the technical solution provided in the embodiment of the present invention, because the UE can normally obtain the system information of the member closed cell, it is ensured that the UE can be normally handed over to the closed cell. In the technical solution provided in the embodiment of the present invention, the system information of the target closed cell can be obtained selectively, thereby saving the network resource occupied by obtaining the system information of the target closed cell, reducing the probability of signaling and data loss in the process of obtaining the system information of the target cell, and effectively reducing the power consumption of the equipment.

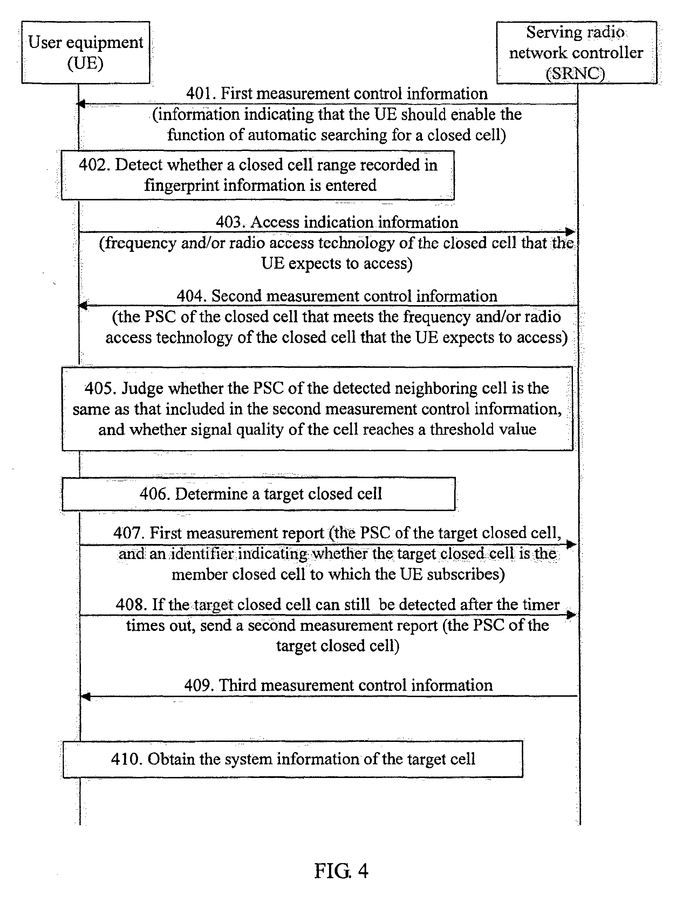

As shown in FIG. 4, a method for obtaining system information of a cell according to still another embodiment of the present invention may include:

Steps 401 to 406 are basically the same as steps 301 to 306 as shown in FIG. 3, and are not described herein.

Step 407: The UE compares the PSC of the target closed cell with the PSC which is of the closed cell and recorded in the fingerprint information; judges whether the target closed cell is a member closed cell to which the UE subscribes; and sends a first measurement report to the SRNC, where the first measurement report includes the PSC of the target closed cell, and an identifier indicating whether the target closed cell is the member closed cell to which the UE subscribes.

In this embodiment, if the target closed cell is the member closed cell to which the UE subscribes, the identifier indicating whether the target closed cell is the member closed cell to which the UE subscribes is "likely"; and if the target closed cell is not the member closed cell to which the UE subscribes, the identifier indicating whether the target closed cell is the member closed cell to which the UE subscribes is "unlikely".

A specific form of the identifier indicating whether the target closed cell is the member closed cell to which the UE subscribes is not limited in the embodiment of the present invention. In practical applications, the identifier may further be other identifiers, which are not described herein.

Step 408: When it is judged that the target closed cell is not the member closed cell to which the UE subscribes in step 407, the UE starts a timer, and judges whether the target closed cell can still be detected after the timer times out. If the target closed cell can be detected, the UE sends a second measurement report to the SRNC, where the second measurement report includes the PSC of the target closed cell; and otherwise, the subsequent process ends.

In this embodiment, the second measurement report may also include or not include the identifier indicating whether the target closed cell is the member closed cell to which the UE subscribes. If the UE can still detect the target closed cell after the timer times out, the UE may determine that the target closed cell is the member closed cell to which the UE subscribes. If the second measurement report includes the identifier indicating whether the target closed cell is the member closed cell to which the UE subscribes, the identifier indicating whether the target closed cell is the member closed cell to which the UE subscribes is "likely". In this process, there is a process of converting "unlikely" to "likely".

Step 409: According to the second measurement report, the SRNC sends third measurement control information to the UE, where the third measurement control information indicates that the UE should obtain the system information of the target closed cell.

Step 410: The UE obtains the system information of the target closed cell according to the third measurement control information.

Optionally, in step 408, when it is judged that the target closed cell is not the member closed cell to which the UE subscribes in step 407, the UE may not start the timer, but continue to detect the signal of the target closed cell; and when the signal quality of the target closed cell reaches a preset threshold value, the UE sends a second measurement report to the SRNC, where the second measurement report includes the PSC of the target closed cell, and an identifier indicating the target closed cell is not the member closed cell to which the UE subscribes ("unlikely"). In step 409, the SRNC judges whether the identifier that is included in the first measurement report sent by the UE in step 407 is "unlikely", where the identifier indicates whether the target closed cell is the member closed cell to which the UE subscribes. If yes, the SRNC starts the timer, and judges whether the second measurement report sent by the UE is received after the timer times out; if the SRNC receives the second measurement report sent by the UE, the SRNC sends the third measurement control information to the UE; and otherwise, the subsequent process is stopped.

According to the method for obtaining system information of a cell provided in the embodiment of the present invention, the UE may judge whether the target closed cell is the member closed cell to which the UE subscribes according to the PSC or PCI of the target closed cell, and send the first measurement report to the SRNC, where the first measurement report includes an identifier that indicates whether the target closed cell is the member closed cell to which the UE subscribes; if the target closed cell is not the member closed cell to which the UE subscribes, the UE starts the timer; if the target closed cell is still detected after the timer times out, the UE sends the second measurement report to the SRNC, and according to the second measurement report, the SRNC sends the indication that the system information of the target cell should be obtained to the UE, and the UE obtains the system information of the target cell according to the indication. Therefore, with the technical solution provided in the embodiment of the present invention, the UE can still normally obtain the system information of the member closed cell after the PSC or PCI of the member closed cell changes. In the technical solution provided in the embodiment of the present invention, because the UE can normally obtain the system information of the member closed cell, it is ensured that the UE can be normally handed over to the closed cell. In the technical solution provided in the embodiment of the present invention, the system information of the target closed cell can be obtained selectively, thereby saving the network resource occupied by obtaining the system information of the target closed cell, reducing the probability of signaling and data loss in the process of obtaining the system information of the target cell, and effectively reducing the power consumption of the UE.

A solution applied in the LTE radio access technology in the embodiment of the present invention is basically the same as that shown in above FIGs. 3 and 4, and the difference lies in that, the PSC of the closed cell is replaced by the PCI.

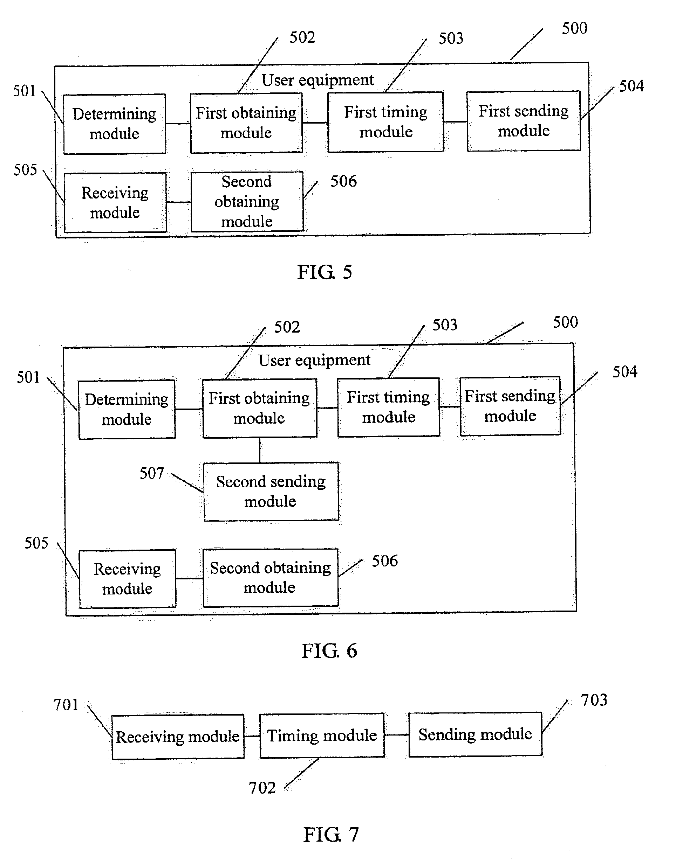

As shown in FIG. 5, an embodiment of the present invention further provides a user equipment 500, including:
a determining module 501, configured to determine a target closed cell;
a first obtaining module 502, configured to obtain a primary synchronization code or physical cell identity of the target closed cell that is determined by the determining module 501;
a first timing module 503, configured to start a timer if the primary synchronization code or physical cell identity of the target closed cell, where the primary synchronization code or physical cell identity of the target closed cell is obtained by the first obtaining module 502, is different from the primary synchronization code or physical cell identity recorded in fingerprint information;
a first sending module 504, configured to send a first measurement report to a network side if the target closed cell is still detected after the timer started by the first timing module 504 times out, where the first measurement report includes the primary synchronization code or physical cell identity of the target closed cell;
a receiving module 505, configured to receive measurement control information sent by the network side based on the first measurement report, where the measurement control information indicates that the system information of the target closed cell should be obtained; and
a second obtaining module 506, configured to obtain the system information of the target closed cell according to the measurement control information received by the receiving module 505.

Further, as shown in FIG. 6, the user equipment 500 according to an embodiment of the present invention may further include:
a second sending module 507, configured to send a second measurement report to the network side if the primary synchronization code or physical cell identity of the target closed cell obtained by the first obtaining module 502 is different from the primary synchronization code or physical cell identity recorded in fingerprint information, where the second measurement report includes the primary synchronization code or physical cell identity of the target closed cell, and an identifier indicating the target closed cell is not a member closed cell to which the user equipment subscribes.

Further, the first sending module 504 is configured to send the first measurement report to the network side if the target closed cell is still detected after the timer started by the first timing module 503 times out, where the first measurement report includes the primary synchronization code or physical cell identity of the target cell, and a subscription indication identifier, where the subscription indication identifier is used to indicate the target closed cell is the member closed cell to which the user equipment subscribes.

For a specific implementation of the user equipment according to the embodiment of the present invention, reference may be made to the relevant description of the method for obtaining system information of a cell according to an embodiment of the present invention, and no repeated description is provided herein.

It should be noted that, in practical applications, a plurality of modules divided in the user equipment according to the embodiment of the present invention (as shown in FIGs. 5 and 6) may also be implemented through a module or a functional unit that has a similar function to the plurality of modules, and no repeated description is provided herein.

According to the user equipment provided in the embodiment of the present invention, when it is judged that the PSC or PCI of the target closed cell is the same as the PSC or PCI stored in the fingerprint information, a timer is started, and if the target closed cell is still detected after the timer times out, the system information of the target cell is obtained. Therefore, with the technical solution provided in the embodiment of the present invention, the UE can still normally obtain the system information of the member closed cell after the PSC or PCI of the member closed cell changes. In the technical solution provided in the embodiment of the present invention, because the UE can normally obtain the system information of the member closed cell, it is ensured that the UE can be normally handed over to the closed cell. In the technical solution provided in the embodiment of the present invention, the system information of the target closed cell can be obtained selectively, thereby saving the network resource occupied by obtaining the system information of the target closed cell, reducing the probability of signaling and data loss in the process of obtaining the system information of the target cell, and effectively reducing the power consumption.

As shown in FIG. 7, an embodiment of the present invention further provides a radio network controller, including:
a receiving module 701, configured to receive a first measurement report sent by a user equipment, where the first measurement report includes a primary synchronization code or physical cell identity of a target closed cell that is determined by the user equipment, and a subscription indication identifier, where the subscription indication identifier is used to indicate whether the target closed cell is a member closed cell to which the user equipment subscribes;
a timing module 702, configured to start a timer if the subscription indication identifier received by the receiving module 701 indicates that the target closed cell is not the member closed cell to which the user equipment subscribes;
a sending module 703, configured to send measurement control information to the user equipment if a second measurement report sent by the user equipment for the target cell is received after the timer of the timing module 702 times out, where the measurement control information indicates that the system information of the target closed cell should be obtained.

For a specific implementation of the radio network controller according to the embodiment of the present invention, reference may be made to the relevant description of the method for obtaining system information of a cell according to an embodiment of the present invention, and no repeated description is provided herein.

It should be noted that, in practical applications, a plurality of modules divided in the radio network controller according to the embodiment of the present invention (as shown in FIG. 7) may also be implemented through a module or a functional unit that has a similar function to the plurality of modules, and no repeated description is provided herein.

According to the serving radio network controller provided in the embodiment of the present invention, a timer is started if it is judged that the target cell is not the member cell to which the user equipment subscribes according to the identifier that is included in the first measurement report sent by the UE, where the identifier indicates whether the target closed cell is the member closed cell to which the user equipment subscribes, and if the second measurement report sent by the UE for the target cell is received after the timer times out, measurement control information is sent to the UE, where the measurement control information indicates that the UE should obtain the system information of the target cell. Therefore, with the technical solution of the embodiment of the present invention, the UE can still normally obtain the system information of the member closed cell after the PSC or PCI of the member closed cell changes, and the problem in the prior art that the system information of the member closed cell cannot be normally obtained after the PSC or PCI of the member closed cell changes is solved. In the technical solution provided in the embodiment of the present invention, because the UE can normally obtain the system information of the member closed cell, it is ensured that the UE can be normally handed over to the closed cell. In the technical solution provided in the embodiment of the present invention, the system information of the target closed cell can be obtained selectively, thereby saving the network resource occupied by obtaining the system information of the target closed cell, reducing the probability of signaling and data loss in the process of obtaining the system information of the target cell, and effectively reducing the power consumption of the user equipment.

The method and device for obtaining system information of a cell that are provided in the embodiments of the present invention may be applied to a process of handing over the UE to the closed cell.

The steps of the method or algorithm described with reference to the embodiments that are disclosed herein may be implemented directly in hardware, in a software module that is executed by a processor, or in a combination of the two. A software module may placed in a random access memory (RAM), a flash memory, a read-only memory (ROM), an erasable programmable ROM, an electrically erasable programmable ROM, a register, a hard disk, a removable disk, a CD-ROM, or any other form of storage medium known in the prior art.

The above are only specific embodiments of the present invention, but the protection scope of the present invention is not limited thereto. Any modification or substitution that is readily conceivable to those skilled in the art within the technical scope disclosed by the present invention should be covered in the protection scope of the present invention. Therefore, the protection scope of the present invention is subject to the appended claims.

## Claims

1. A method for obtaining system information of a cell by a user equipment, comprising:
determining (101) a target closed cell;
obtaining (102) a primary synchronization code or physical cell identity of the target closed cell;
**characterized by** further comprising:
if the primary synchronization code of the target closed cell is different from a stored primary synchronization code, or the physical cell identity of the target closed cell is different from a stored physical cell identity, starting (103) a timer, where the stored primary synchronization code or the stored physical cell identity of the closed cell is stored in fingerprint information, where the fingerprint information includes related information that is recorded by a user equipment for the closed cell that UE has accessed, and the related information of each closed cell is recorded in the fingerprint information;
if the target closed cell is detected after the timer times out, sending (103) a first measurement report to a network side, wherein the first measurement report comprises the primary synchronization code or physical cell identity of the target closed cell;
receiving (104) measurement control information sent by the network side based on the first measurement report, wherein the measurement control information is used to indicate that system information of the target closed cell should be obtained; and
obtaining (105) the system information of the target closed cell according to the measurement control information.

2. The method according to claim 1, wherein the first measurement report further comprises a subscription indication identifier, and the subscription indication identifier is used to indicate the target closed cell is a member closed cell to which a user equipment subscribes.

3. The method according to claim 1, wherein a timing time of the timer is set by the network side through a measurement control message or system information broadcast, or is a preset default value.

4. A method for obtaining system information of a cell on a network side, comprising:
receiving (201) a first measurement report sent by a user equipment, wherein the first measurement report comprises a primary synchronization code or physical cell identity of a target closed cell determined by the user equipment, and a subscription indication identifier, wherein the subscription indication identifier is used to indicate whether the target closed cell is a member closed cell to which the user equipment subscribes;
**characterized by** further comprising:
if the subscription indication identifier indicates that the target closed cell is not the member closed cell to which the user equipment subscribes, starting (202) a timer; and
if a second measurement report sent by the user equipment for the target closed cell is received after the timer times out, sending (203) measurement control information to the user equipment, wherein the measurement control information is used to indicate that system information of the target closed cell should be obtained.

5. A user equipment, comprising:
a determining module (501), configured to determine a target closed cell;
a first obtaining module (502), configured to obtain a primary synchronization code or physical cell identity of the target closed cell that is determined by the determining module (501);
**characterized by** further comprising:
a first timing module (503), configured to start a timer if the primary synchronization code of the target closed cell obtained by the first obtaining module (502) is different from a stored primary synchronization code, or the physical cell identity of the target closed cell is different from a stored physical cell identity, where the stored primary synchronization code or the stored physical cell identity of the closed cell is stored in fingerprint information, where the fingerprint information includes related information that is recorded by a user equipment for the closed cell that UE has accessed, and the related information of each closed cell is recorded in the fingerprint information;
a first sending module (504), configured to send a first measurement report to a network side if the target closed cell is detected after the timer started by the first timing module (503) times out, wherein the first measurement report comprises the primary synchronization code or physical cell identity of the target closed cell;
a receiving module (505), configured to receive measurement control information sent by the network side based on the first measurement report, wherein the measurement control information is used to indicate that system information of the target closed cell should be obtained; and
a second obtaining module (506), configured to obtain the system information of the target closed cell according to the measurement control information received by the receiving module (505).

6. The user equipment according to claim 5, wherein:
the first sending module (504) is configured to send the first measurement report to the network side if the target closed cell is still detected after the timer started by the first timing module (503) times out, wherein the first measurement report comprises the primary synchronization code or physical cell identity of the target closed cell, and a subscription indication identifier, wherein the subscription indication identifier is used to indicate the target closed cell is a member closed cell to which the user equipment subscribes.

7. A radio network controller, comprising:
a receiving module (701), configured to receive a first measurement report sent by a user equipment, wherein the first measurement report comprises a primary synchronization code or physical cell identity of a target closed cell that is determined by the user equipment, and further comprises a subscription indication identifier, wherein the subscription indication identifier is used to indicate whether the target closed cell is a member closed cell to which the user equipment subscribes;
**characterized by** further comprising:
a timing module (702), configured to start a timer if the subscription indication identifier received by the receiving module (701) indicates that the target closed cell is not the member closed cell to which the user equipment subscribes; and
a sending module (703), configured to send measurement control information to the user equipment if a second measurement report sent by the user equipment for the target closed cell is received after the timer of the timing module (702) times out, wherein the measurement control information is used to indicate that system information of the target closed cell should be obtained.

8. A software module, **characterized by**, comprising computer program code, which, when executed by a processor, will cause the processor perform the steps according to any one of claims 1 to 3.

9. A software module, **characterized by**, comprising computer program code, which, when executed by a processor, will cause the processor perform the steps according to claim 4.

## Patentansprüche

1. Verfahren zur Gewinnung von Systeminformationen einer Zelle durch ein Benutzer-Equipment, welches umfasst:
Bestimmen (101) einer geschlossenen Zielzelle;
Gewinnen (102) eines primären Synchronisationscodes oder einer physischen Zellkennung der geschlossenen Zielzelle;
**dadurch gekennzeichnet, dass** es ferner umfasst:
falls der primäre Synchronisationscode der geschlossenen Zielzelle von einem gespeicherten primären Synchronisationscode verschieden ist oder die physische Zellkennung der geschlossenen Zielzelle von einer gespeicherten physischen Zellkennung verschieden ist, Starten (103) eines Zeitgebers, wobei der gespeicherte primäre Synchronisationscode oder die gespeicherte physische Zellkennung der geschlossenen Zelle in Fingerabdruckinformationen gespeichert wird, wobei die Fingerabdruckinformationen zugehörige Informationen enthalten, welche von einem Benutzer-Equipment für die geschlossene Zelle aufgezeichnet werden, auf die das Benutzer-Equipment (User Equipment, UE) zugegriffen hat, und die zugehörigen Informationen jeder geschlossenen Zelle in den Fingerabdruckinformationen aufgezeichnet werden;
falls die geschlossene Zielzelle erkannt wird, nachdem der Zeitgeber abläuft, Senden (103) eines ersten Messberichts an eine Netzseite, wobei der erste Messbericht den primären Synchronisationscode oder die physische Zellkennung der geschlossenen Zielzelle umfasst;
Empfangen (104) von Messungssteuerungsinformationen, die von der Netzseite auf der Basis des ersten Messberichts gesendet werden, wobei die essungssteuerungsinformationen verwendet werden, um anzuzeigen, dass Systeminformationen der geschlossenen Zielzelle gewonnen werden sollten; und
Gewinnen (105) der Systeminformationen der geschlossenen Zielzelle entsprechend den Messungssteuerungsinformationen.

2. Verfahren nach Anspruch 1, wobei der erste Messbericht ferner eine Teilnahmeanzeigekennung umfasst und die Teilnahmeanzeigekennung verwendet wird, um anzuzeigen, dass die geschlossene Zielzelle eine geschlossene Mitgliedszelle ist, deren Teilnehmer ein Benutzer-Equipment ist.

3. Verfahren nach Anspruch 1, wobei eine Laufzeit des Zeitgebers von der Netzseite durch eine essungssteuerungsnachricht oder Rundsenden von Systeminformationen eingestellt wird oder ein voreingestellter Standardwert ist.

4. Verfahren zur Gewinnung von Systeminformationen einer Zelle auf einer Netzseite, welches umfasst:
Empfangen (201) eines ersten Messberichts, der von einem Benutzer-Equipment gesendet wird, wobei der erste Messbericht einen primären Synchronisationscode oder eine physische Zellkennung einer geschlossenen Zielzelle, die von dem Benutzer-Equipment bestimmt wird, und eine Teilnahmeanzeigekennung umfasst,
wobei die Teilnahmeanzeigekennung verwendet wird, um anzuzeigen, ob die geschlossene Zielzelle eine geschlossene Mitgliedszelle ist, deren Teilnehmer das Benutzer-Equipment ist;
**dadurch gekennzeichnet, dass** es ferner umfasst:
falls die Teilnahmeanzeigekennung anzeigt, dass die geschlossene Zielzelle nicht die geschlossene Mitgliedszelle ist, deren Teilnehmer das Benutzer-Equipment ist, Starten (202) eines Zeitgebers; und
falls ein zweiter Messbericht, der durch das Benutzer-Equipment für die geschlossene Zielzelle gesendet wird, empfangen wird, nachdem der Zeitgeber abläuft, Senden (203) von Messungssteuerungsinformationen an das Benutzer-Equipment, wobei die Messungssteuerungsinformationen verwendet werden, um anzuzeigen, dass Systeminformationen der geschlossenen Zielzelle gewonnen werden sollten.

5. Benutzer-Equipment, welches umfasst:
ein Bestimmungsmodul (501), das dafür konfiguriert ist, eine geschlossene Zielzelle zu bestimmen;
ein erstes Gewinnungsmodul (502), das dafür konfiguriert ist, einen primären Synchronisationscode oder eine physische Zellkennung der geschlossenen Zielzelle zu gewinnen, welche durch das Bestimmungsmodul (501) bestimmt wird;
**dadurch gekennzeichnet, dass** es ferner umfasst:
ein erstes Zeitgabemodul (503), das dafür konfiguriert ist, einen Zeitgeber zu starten, falls der primäre Synchronisationscode der geschlossenen Zielzelle, der durch das erste Gewinnungsmodul (502) gewonnen wird, von einem gespeicherten primären Synchronisationscode verschieden ist oder die physische Zellkennung der geschlossenen Zielzelle von einer gespeicherten physischen Zellkennung verschieden ist, wobei der gespeicherte primäre Synchronisationscode oder die gespeicherte physische Zellkennung der geschlossenen Zelle in Fingerabdruckinformationen gespeichert wird, wobei die Fingerabdruckinformationen zugehörige Informationen enthalten, welche von einem Benutzer-Equipment für die geschlossene Zelle aufgezeichnet werden, auf die das UE zugegriffen hat, und die zugehörigen Informationen jeder geschlossenen Zelle in den Fingerabdruckinformationen aufgezeichnet werden;
ein erstes Sendemodul (504), das dafür konfiguriert ist, einen ersten Messbericht an eine Netzseite zu senden, falls die geschlossene Zielzelle erkannt wird, nachdem der durch das erste Zeitgabemodul (503) gestartete Zeitgeber abläuft, wobei der erste Messbericht den primären Synchronisationscode oder die physische Zellkennung der geschlossenen Zielzelle umfasst;
ein Empfangsmodul (505), das dafür konfiguriert ist, Messungssteuerungsinformationen zu empfangen, die von der Netzseite auf der Basis des ersten Messberichts gesendet werden, wobei die Messungssteuerungsinformationen verwendet werden, um anzuzeigen, dass Systeminformationen der geschlossenen Zielzelle gewonnen werden sollten; und
ein zweites Gewinnungsmodul (506), das dafür konfiguriert ist, die Systeminformationen der geschlossenen Zielzelle entsprechend den Messungssteuerungsinformationen, die durch das Empfangsmodul (505) empfangen wurden, zu gewinnen.

6. Benutzer-Equipment nach Anspruch 5, wobei:
das erste Sendemodul (504) dafür konfiguriert ist, den ersten Messbericht an die Netzseite zu senden, falls die geschlossene Zielzelle noch immer erkannt wird, nachdem der durch das erste Zeitgabemodul (503) gestartete Zeitgeber abläuft, wobei der erste Messbericht den primären Synchronisationscode oder die physische Zellkennung der geschlossenen Zielzelle und eine Teilnahmeanzeigekennung umfasst, wobei die Teilnahmeanzeigekennung verwendet wird, um anzuzeigen, dass die geschlossene Zielzelle eine geschlossene Mitgliedszelle ist, deren Teilnehmer das Benutzer-Equipment ist.

7. Funknetzsteuerung, welche umfasst:
ein Empfangsmodul (701), das dafür konfiguriert ist, einen ersten Messbericht zu empfangen, der von einem Benutzer-Equipment gesendet wird, wobei der erste Messbericht einen primären Synchronisationscode oder eine physische Zellkennung einer geschlossenen Zielzelle, welche von dem Benutzer-Equipment bestimmt wird, umfasst und ferner eine Teilnahmeanzeigekennung umfasst, wobei die Teilnahmeanzeigekennung verwendet wird, um anzuzeigen, ob die geschlossene Zielzelle eine geschlossene Mitgliedszelle ist, deren Teilnehmer das Benutzer-Equipment ist;
**dadurch gekennzeichnet, dass** sie ferner umfasst:
ein Zeitgabemodul (702), das dafür konfiguriert ist, einen Zeitgeber zu starten, falls die durch das Empfangsmodul (701) empfangene Teilnahmeanzeigekennung anzeigt, dass die geschlossene Zielzelle nicht die geschlossene Mitgliedszelle ist, deren Teilnehmer das Benutzer-Equipment ist; und
ein Sendemodul (703), das dafür konfiguriert ist, Messungssteuerungsinformationen an das Benutzer-Equipment zu senden, falls ein zweiter Messbericht, der durch das Benutzer-Equipment für die geschlossene Zielzelle gesendet wird, empfangen wird, nachdem der Zeitgeber des Zeitgabemoduls (702) abläuft, wobei die Messungssteuerungsinformationen verwendet werden, um anzuzeigen, dass Systeminformationen der geschlossenen Zielzelle gewonnen werden sollten.

8. Softwaremodul, **dadurch gekennzeichnet, dass** es Computerprogrammcode umfasst, welcher, wenn er durch einen Prozessor ausgeführt wird, bewirkt, dass der Prozessor die Schritte nach einem der Ansprüche 1 bis 3 ausführt.

9. Softwaremodul, **dadurch gekennzeichnet, dass** es Computerprogrammcode umfasst, welcher, wenn er durch einen Prozessor ausgeführt wird, bewirkt, dass der Prozessor die Schritte nach Anspruch 4 ausführt.

## Revendications

1. Procédé d'obtention d'informations de système d'une cellule par un équipement utilisateur, comprenant :
la détermination (101) d'une cellule fermée cible ;
l'obtention (102) d'un code de synchronisation principal ou d'une identité de cellule physique de la cellule fermée cible ;
**caractérisé en ce qu'**il comprend en outre :
si le code de synchronisation principal de la cellule fermée cible est différent d'un code de synchronisation principal mémorisé, ou si l'identité de cellule physique de la cellule fermée cible est différente d'une identité de cellule physique mémorisée, le lancement (103) d'une temporisation, le code de synchronisation principal mémorisé ou l'identité de cellule physique mémorisée de la cellule fermée cible étant mémorisé(e) dans des informations d'empreintes digitales, les informations d'empreintes digitales comportant des informations connexes qui sont enregistrées par un équipement utilisateur de la cellule fermée que l'UE a sollicité, et les informations connexes de chaque cellule fermée sont enregistrées dans les informations d'empreintes digitales ;
si la cellule fermée cible est détectée après l'expiration de la temporisation, l'envoi (103) d'un premier rapport de mesure à un côté réseau, le premier rapport de mesure comportant le code de synchronisation principal ou l'identité de cellule physique de la cellule fermée cible ;
la réception (104) d'informations de commande de mesure envoyées par le côté réseau en fonction du premier rapport de mesure, les informations de commande de mesure étant utilisées pour indiquer que des informations de système de la cellule fermée cible doivent être obtenues ; et
l'obtention (105) des informations de système de la cellule fermée cible en fonction des informations de commande de mesure.

2. Procédé selon la revendication 1, dans lequel le premier rapport de mesure comprend en outre un identifiant d'indication de souscription, et l'identifiant d'indication de souscription est utilisé pour indiquer que la cellule fermée cible est une cellule fermée membre à laquelle un équipement utilisateur souscrit.

3. Procédé selon la revendication 1, dans lequel une durée de temporisation de la temporisation est réglée par le côté réseau par la diffusion d'un message de commande de mesure ou d'informations de système, ou est une valeur préréglée par défaut.

4. Procédé d'obtention d'informations de système d'une cellule sur un côté réseau, comprenant :
la réception (201) d'un premier rapport de mesure envoyé par un équipement utilisateur, le premier rapport de mesure comprenant un code de synchronisation principal ou une identité de cellule physique d'une cellule fermée cible déterminée par l'équipement utilisateur, et un identifiant d'indication de souscription, l'identifiant d'indication de souscription étant utilisé pour indiquer si la cellule fermée cible est une cellule fermée membre à laquelle un équipement utilisateur souscrit ;
**caractérisé en ce qu'**il comprend en outre :
si l'identifiant d'indication de souscription indique que la cellule fermée cible n'est pas une cellule fermée membre à laquelle un équipement utilisateur souscrit, le lancement (202) d'une temporisation ; et
si un second rapport de mesure envoyé par l'équipement utilisateur pour la cellule fermée cible est reçu après l'expiration de la temporisation, l'envoi (203) d'informations de commande de mesure à l'équipement utilisateur, les informations de commande de mesure étant utilisées pour indiquer que des informations de système de la cellule fermée cible doivent être obtenues.

5. Equipement utilisateur, comprenant :
un module de détermination (501), configuré pour déterminer une cellule fermée cible ;
un premier module d'obtention (502), configuré pour obtenir un code de synchronisation principal ou une identité de cellule physique de la cellule fermée cible qui est déterminée par le module de détermination (501) ;
**caractérisé en ce qu'**il comprend :
un premier module de temporisation (503), configuré pour lancer une temporisation si le code de synchronisation principal de la cellule fermée cible obtenu par le premier module d'obtention (502) est différent d'un code de synchronisation principal mémorisé, ou si l'identité de cellule physique de la cellule fermée cible est différente d'une identité de cellule physique mémorisée, le code de synchronisation principal mémorisé ou l'identité de cellule physique mémorisée de la cellule fermée cible étant mémorisé(e) dans des informations d'empreintes digitales, les informations d'empreintes digitales comportant des informations connexes qui sont enregistrées par un équipement utilisateur de la cellule fermée que l'UE a sollicité, et les informations connexes de chaque cellule fermée sont enregistrées dans les informations d'empreintes digitales ;
un premier module d'envoi (504), configuré pour envoyer un premier rapport de mesure à un côté réseau si la cellule fermée cible est détectée après l'expiration de la temporisation lancée par le premier module de temporisation (503), le premier rapport de mesure comportant le code de synchronisation principal ou l'identité de cellule physique de la cellule fermée cible ;
un module de réception (505), configuré pour recevoir des informations de commande de mesure envoyées par le côté réseau en fonction du premier rapport de mesure, les informations de commande de mesure étant utilisées pour indiquer que des informations de système de la cellule fermée cible doivent être obtenues ; et
un second module d'obtention (506), configuré pour obtenir les informations de système de la cellule fermée cible en fonction des informations de commande de mesure reçues par le module de réception (505).

6. Equipement utilisateur selon la revendication 5, dans lequel :
le premier module d'envoi (504) est configuré pour envoyer le premier rapport de mesure au côté réseau si la cellule fermée cible est toujours détectée après l'expiration de la temporisation lancée par le premier module de temporisation (503),
le premier rapport de mesure comportant le code de synchronisation principal ou l'identité de cellule physique de la cellule fermée cible, et un identifiant d'indication de souscription, l'identifiant d'indication de souscription étant utilisé pour indiquer que la cellule fermée cible est une cellule fermée membre à laquelle un équipement utilisateur souscrit.

7. Contrôleur de réseau radio, comprenant :
un module de réception (701), configuré pour recevoir un premier rapport de mesure envoyé par un équipement utilisateur, le premier rapport de mesure comprenant un code de synchronisation principal ou une identité de cellule physique d'une cellule fermée cible qui est déterminée par l'équipement utilisateur, et comprenant en outre identifiant d'indication de souscription, l'identifiant d'indication de souscription étant utilisé pour indiquer si la cellule fermée cible est une cellule fermée membre à laquelle un équipement utilisateur souscrit ;
**caractérisé en ce qu'**il comprend en outre :
un module de temporisation (702), configuré pour lancer une temporisation si l'identifiant d'indication de souscription reçu par le module de réception (701) indique que la cellule fermée cible n'est pas la cellule fermée membre à laquelle l'équipement utilisateur souscrit ; et
un module d'envoi (703), configuré pour envoyer des informations de commande de mesure à l'équipement utilisateur si un second rapport de mesure envoyé par l'équipement utilisateur pour la cellule fermée cible est reçu après l'expiration de la temporisation du module de temporisation (702), les informations de commande de mesure étant utilisées pour indiquer que des informations de système de la cellule fermée cible doivent être obtenues.

8. Module logiciel, **caractérisé en ce qu'**il comprend un code de programme informatique, lequel, quand il est exécuté par un processeur, amène le processeur à exécuter les étapes selon l'une quelconque des revendications 1 à 3.

9. Module logiciel, **caractérisé en ce qu'**il comprend un code de programme informatique, lequel, quand il est exécuté par un processeur, amène le processeur à exécuter les étapes selon la revendication 4.
